# EUROPEAN PATENT APPLICATION

(11) **EP 4 651 040 A1**
(43) Date of publication of application: **19.11.2025**
(21) Application number: 23915917.1
(22) Date of filing: 11.01.2023
(51) Int. Cl.: G06N 10/40, G01R 29/08, H01L 29/82

(54) **QUANTUM CONVERTER AND QUANTUM CONVERSION METHOD**

(71) Applicant: FUJITSU LIMITED, Kawasaki-shi, Kanagawa 211-8588 (JP)
(72) Inventor: SEKINE, Akihiko, Kawasaki-shi, Kanagawa 211-8588 (JP)
(74) Representative: Hoffmann Eitle
(86) International application number: PCT/JP2023/000372
(87) International publication number: WO 2024/150293

(57) **Abstract**

A quantum frequency converter includes a ferromagnetic topological insulator film having a first surface, a magnetic field application region where a magnetic field including a component perpendicular to the first surface is applied to the ferromagnetic topological insulator film, and a microwave transceiver configured to transmit and receive microwaves to and from the ferromagnetic topological insulator film, and the first surface of the ferromagnetic topological insulator film is irradiated with laser light. The quantum frequency converter can be used in quantum computers.

## Description

### TECHNICAL FIELD

The present disclosure relates to quantum frequency converters, and quantum frequency conversion methods.

### BACKGROUND ART

In quantum computers, a quantum frequency conversion may be performed between microwave photons and optical photons. Further, quantum frequency converters for performing the quantum frequency conversion have been proposed.

### PRIOR ART DOCUMENTS

### PATENT DOCUMENTS

Patent Document 1: Japanese National Publication of International Patent Application No. 2019-512161
Patent Document 2: Japanese National Publication of International Patent Application No. 2019-512104
Patent Document 3: U.S. Patent Application Publication No. 2022/0207405
Patent Document 4: U.S. Patent Application Publication No. 2021/0271999

### NON-PATENT DOCUMENTS

Non-Patent Document 1: R. Hisatomi et al., Phys. Rev. B 93, 174427 (2016)
Non-Patent Document 2: Tse & MacDonald, Phys. Rev. Lett. 105 057401 (2010)
Non-Patent Document 3: J. Maciejko et al., Phys. Rev. Lett. 105 166803 (2010)

### DISCLOSURE OF THE INVENTION

### PROBLEM TO BE SOLVED BY THE INVENTION

In conventional quantum frequency converters, a conversion efficiency of the quantum frequency conversion is low.

One object of the present disclosure is to provide a quantum frequency converter and a quantum frequency conversion method that can improve the conversion efficiency.

### MEANS OF SOLVING THE PROBLEM

According to an aspect of the present disclosure, there is provided a quantum frequency converter including a ferromagnetic topological insulator film having a first surface; a magnetic field application region where a magnetic field including a component perpendicular to the first surface is applied to the ferromagnetic topological insulator film; and a microwave transceiver configured to transmit and receive microwaves to and from the ferromagnetic topological insulator film, wherein the first surface of the ferromagnetic topological insulator film is irradiated with laser light.

### EFFECTS OF THE INVENTION

According to the present disclosure, it is possible to improve the conversion efficiency.

### BRIEF DESCRIPTION OF THE DRAWINGS

[FIG. 1] FIG. 1 is a schematic diagram illustrating a quantum frequency converter according to a first embodiment.
[FIG. 2] FIG. 2 is a schematic diagram illustrating a quantum frequency converter according to a reference example.
[FIG. 3] FIG. 3 is a diagram illustrating a relationship of a thickness of a ferromagnetic topological insulator film and a conversion efficiency ratio.
[FIG. 4] FIG. 4 is a diagram illustrating a relationship of the thickness of the ferromagnetic topological insulator film, an atomic ratio of a ferromagnetic material, and the conversion efficiency ratio.
[FIG. 5] FIG. 5 is a schematic diagram illustrating a quantum frequency converter according to a second embodiment.
[FIG. 6] FIG. 6 is a schematic diagram illustrating a quantum frequency converter according to a third embodiment.

### MODE OF CARRYING OUT THE INVENTION

Hereinafter, embodiments of the present disclosure will be described in detail with reference to the accompanying drawings. In the present specification and drawings, constituent elements having substantially the same functional configuration are designated by the same reference numerals, and a redundant description thereof may be omitted.

### (First Embodiment)

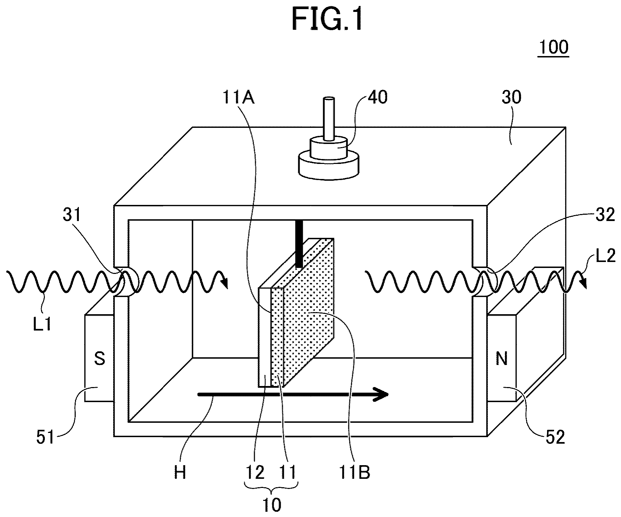

A first embodiment will be described. The first embodiment relates to a quantum frequency converter. FIG. 1 is a schematic diagram illustrating a quantum frequency converter according to a first embodiment.

As illustrated in FIG. 1, a quantum frequency converter 100 according to the first embodiment includes a microwave resonator 30, a stacked structure 10, an S pole 51, an N pole 52, and an antenna 40.

The stacked structure 10 includes a ferromagnetic topological insulator film 11, and a first film 12. The ferromagnetic topological insulator film 11 has a first surface 11A, and a second surface 11B opposite to the first surface 11A. The first film 12 is in contact with the first surface 11A. The first film 12 is composed of a nonmagnetic insulator, for example. The first film 12 is a substrate including SrTiO₃, or InP, or Al₂O₃, or an arbitrary combination of two or more of SrTiO₃, InP, and Al₂O₃, for example. The ferromagnetic topological insulator film 11 includes a topological insulator, and a ferromagnetic material doped into a topological insulator. For example, the topological insulator includes Bi, Sb, and Te, and the ferromagnetic material includes Cr, or V, or both of Cr and V. A composition of the ferromagnetic topological insulator film 11 is Crₓ(Bi_{1-y}Sb_{y})₂₋ₓTe₃ or Vₓ(Bi_{1-y}Sb_{y})₂₋ₓTe₃, for example. For example, x has a value that is 0.1 or greater and 0.6 or less, and y has a value that is 0.7 or greater and 0.9 or less. The ferromagnetic topological insulator film 11 has a thickness that is 5 nm or greater and 100 µm or less, for example. The ferromagnetic topological insulator film 11 has a square planar shape in a plan view from above in a direction perpendicular to the first surface 11A, and a length of one side of the square planar shape is 1 mm. The planar shape of the ferromagnetic topological insulator film 11 is not limited to the square shape, and may be a circular shape or the like.

The S pole 51 and the N pole 52 are provided on an outer wall surface of the microwave resonator 30. The S pole 51 faces the first surface 11A, and the N pole 52 faces the second surface 11B. A magnetic field H directed from the S pole 51 to the N pole 52 is generated between the S pole 51 and the N pole 52. The S pole 51 and the N pole 52 function as a magnetic field application region where the magnetic field H including a component perpendicular to the first surface 11A is applied to the ferromagnetic topological insulator film 11.

The antenna 40 is provided on the outer wall surface of the microwave resonator 30. The antenna 40 serves as a microwave transceiver configured to transmit and receive microwaves to and from the ferromagnetic topological insulator film 11.

The microwave resonator 30 is provided with an input port 31 and an output port 32. The input port 31 faces the first surface 11A, and the output port 32 faces the second surface 11B. An optical fiber is coupled to the input port 31, and laser light L1 is irradiated from the outside toward the ferromagnetic topological insulator film 11 through the input port 31. The laser light L1 is irradiated onto the first surface 11A of the ferromagnetic topological insulator film 11. An optical fiber is coupled to the output port 32, and laser light L2 transmitted through the ferromagnetic topological insulator film 11 is emitted to the outside through the output port 32. The laser light L1 is linearly polarized laser light.

Polarization or the like of the laser light L2 emitted to the outside through the output port 32 is detected. Hence, microwave photons of the microwaves irradiated onto the ferromagnetic topological insulator film 11 through the antenna 40 are quantum frequency converted into optical photons.

Next, characteristics of the ferromagnetic topological insulator film 11 will be described.

In general, the photon conversion efficiency η by a ferromagnetic material utilizing the Faraday effect is approximately represented by "ϕ_{F}²/N_{S}²". Here, "ϕ_{F}" denotes the Faraday rotation angle, and "N_{S}" denotes a total spin number included in the ferromagnetic material.

Further, in general, the Faraday rotation angle ϕ_{F} in the ferromagnetic topological insulator film is represented by "tan⁻¹α (rad)". Here, α denotes a fine-structure constant, and a value of "tan⁻¹α (rad)", that is, the Faraday rotation angle ϕ_{F}, is approximately 1/137 rad.

The total spin number N_{S} included in the ferromagnetic topological insulator film 11 is "n_{S} × V", where n_{S} (mm⁻³) denotes a spin density per unit volume of the ferromagnetic topological insulator film 11, and V (mm³) denotes a volume of the ferromagnetic topological insulator film 11. When a spin density per unit volume of the ferromagnetic material included in the ferromagnetic topological insulator film 11 is denoted by n_{S0} (mm⁻³), and an atomic ratio of the ferromagnetic material in the ferromagnetic topological insulator film 11 is denoted by γ_{S}, the spin density n_{S} per unit volume of the ferromagnetic topological insulator film 11 can be represented by "γ_{S} × n_{S0} (mm⁻³)".

As an example, the spin density n_{S} of the ferromagnetic topological insulator film 11 having a composition Cr_{0.15}(Bi_{0.1}Sb_{0.9})_{1.85}Te₃ (x = 0.15, y = 0.9) can be obtained as follows. In (Bi_{0.1}Sb_{0.9})₂Te₃, 40 atomic % is Bi or Sb. In addition, in Cr_{0.15}(Bi_{0.1}Sb_{0.9})_{1.85}Te₃, 15 atomic % of Bi or Sb included in (Bi_{0.1}Sb_{0.9})₂Te₃ is substituted with Cr. Accordingly, the atomic ratio of Cr in Cr_{0.15}(Bi_{0.1}Sb_{0.9})_{1.85}Te₃ is 6 atomic %. For this reason, when the spin density per unit volume of Cr is denoted by n_{S0,Cr}, the spin density n_{S} of the ferromagnetic topological insulator film 11 for the case where the composition thereof is Cr_{0.15}(Bi_{0.1}Sb_{0.9})_{1.85}Te₃ is "0.06 × n_{S0,Cr} (mm⁻³)". Hence, a conversion efficiency η_{TI} of the ferromagnetic topological insulator film 11 for the case where the composition thereof is Cr_{0.15}(Bi_{0.1}Sb_{0.9})_{1.85}Te₃ can be represented by "(1/137)²/(0.06 × n_{S0,Cr} × V)²". Because the spin density n_{S0,Cr} is 2.1 × 10¹⁹ mm⁻³, the conversion efficiency η_{TI} of the ferromagnetic topological insulator film 11 is approximately 1.14 × 10⁻² when a thickness d of the ferromagnetic topological insulator film 11 is 30 nm and an area S of the first surface 11A is 1 mm².

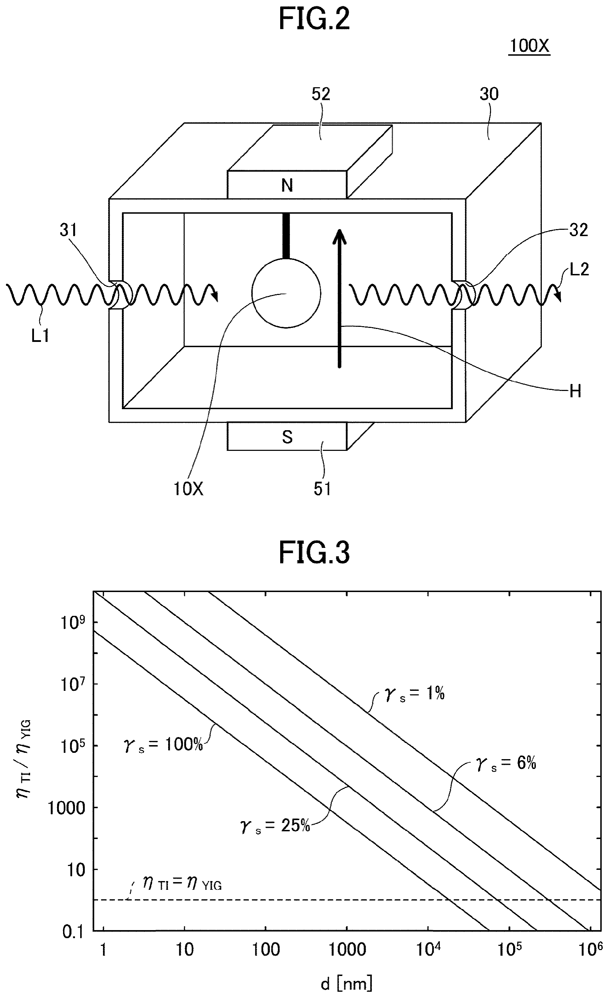

Next, a reference example will be described for comparison with the first embodiment. The reference example differs from the first embodiment mainly in the configuration of the ferromagnetic structure and the arrangement of the magnetic poles. FIG. 2 is a schematic diagram illustrating a quantum frequency converter according to the reference example.

As illustrated in FIG. 2, a quantum frequency converter 100X according to the reference example includes a ferromagnetic spherical structure 10X in place of the stacked structure 10. The spherical structure 10X is composed of yttrium-iron-garnet (YIG), and the spherical structure 10X has a diameter of 0.75 mm. Further, the S pole 51 and the N pole 52 are arranged so that the magnetic field H is generated in a direction perpendicular to a propagating direction of the laser light L1. Otherwise, the configuration is the same as that of the first embodiment.

The Faraday rotation angle ϕ_{F} of the spherical structure 10X is represented by "γ × d (rad)", where γ (rad/mm) denotes the Verde constant, and d (mm) denotes the diameter. The Verde constant of YIG is 0.38 (rad/mm) .

The total spin number N_{S} included in the spherical structure 10X is "nₛ × V", when the spin density per unit volume of the spherical structure 10X is denoted by n_{S} (mm⁻³), and a volume of the spherical structure 10X is denoted by V (mm³). The spherical structure 10X is entirely composed of YIG, which is a ferromagnetic material, and the spin density n_{S} is equal to the spin density n_{S0} (mm⁻³) per unit volume of YIG. Hence, when the spin density n_{S0} per unit volume of YIG is denoted by n_{S0,YIG}, the conversion efficiency η of the spherical structure 10X composed of YIG can be represented by "(0.38)²/(n_{S0,YIG} × V)2". Because the spin density n_{S0,YIG} is 2.1 × 10¹⁹ mm⁻³, a conversion efficiency η_{YIG} of the spherical structure 10X is approximately 10⁻¹⁰ when the volume V is 2209 mm³ (the diameter is 0.75 mm).

Accordingly, the conversion efficiency η of the ferromagnetic topological insulator film 11 in the first embodiment is about 108 times as large as the conversion efficiency η_{YIG} of the spherical structure 10X in the reference example.

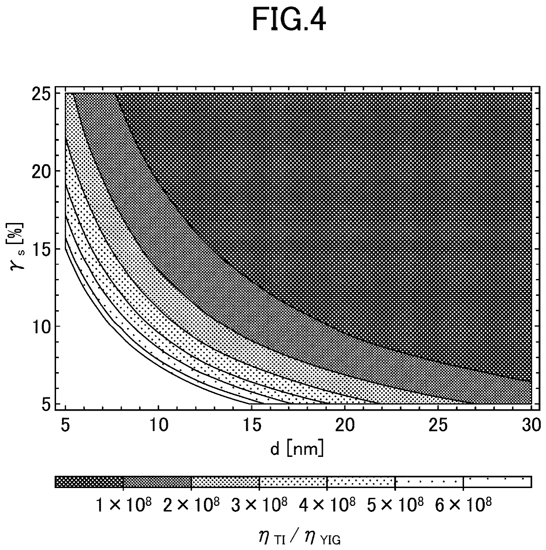

Next, a relationship of the thickness d of the ferromagnetic topological insulator film 11, the atomic ratio γ_{S} of the ferromagnetic material, and a conversion efficiency ratio (η_{TI}/η_{YIG}) will be described. FIG. 3 is a diagram illustrating the relationship of the thickness d of the ferromagnetic topological insulator film 11 and the conversion efficiency ratio (η_{TI}/η_{YIG}). FIG. 3 illustrates the relationship when the atomic ratio γ_{S} of the ferromagnetic material is 1%, 6%, 25%, and 100%. FIG. 4 is a diagram illustrating the relationship between the thickness d of the ferromagnetic topological insulator film 11, the atomic ratio γ_{S} of the ferromagnetic material, and the conversion efficiency ratio (η_{TI}/η_{YIG}). As illustrated in FIG. 3 and FIG. 4, if the atomic ratio γ_{S} of the ferromagnetic material is constant, the smaller the thickness d of the ferromagnetic topological insulator film 11 is, the larger the conversion efficiency ratio (η_{TI}/η_{YIG}) becomes. Further, if the thickness d of the ferromagnetic topological insulator film 11 is constant, the smaller the atomic ratio γ_{S} of the ferromagnetic material is, the larger the conversion efficiency ratio (η_{TI}/η_{YIG}) becomes. For example, in a case where the atomic ratio γ_{S} of the ferromagnetic material is 6% or higher and 25% or lower and the depth d of the ferromagnetic topological insulator film 11 is 5 nm or greater and 30 nm or less, the conversion efficiency ratio (η_{TI}/η_{YIG}) is approximately 1 × 10⁸ or greater and 1 × 10⁹ or less.

If the depth d of the ferromagnetic topological insulator film 11 is less than 5 nm, the ferromagnetic topological insulator film 11 behaves as a two-dimensional material, and the Faraday effect may be difficult to obtain. In contrast, when the depth d is greater than or equal to 5 nm, it is possible to stably form the ferromagnetic topological insulator film 11.

### (Second Embodiment)

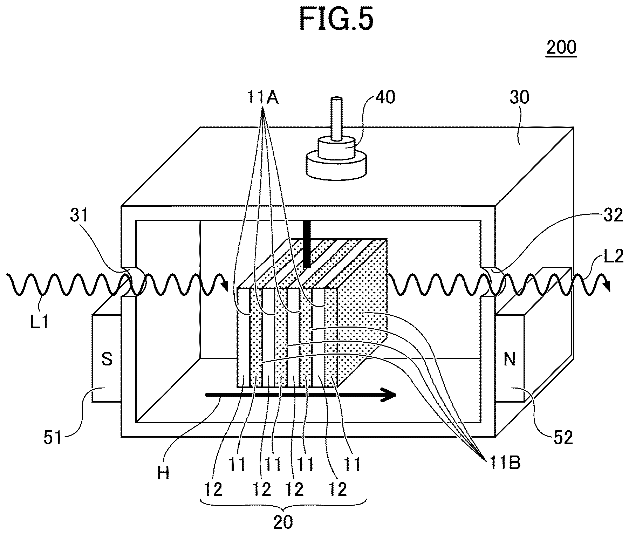

A second embodiment will be described. The second embodiment differs from the first embodiment mainly in the configuration of the stacked structure. FIG. 5 is a schematic diagram illustrating a quantum frequency converter according to the second embodiment.

As illustrated in FIG. 5, a quantum frequency converter 200 according to the second embodiment includes a stacked structure 20 in place of the stacked structure 10.

The stacked structure 20 includes a plurality of ferromagnetic topological insulator films 11, and a plurality of first films 12. The plurality of ferromagnetic topological insulator films 11 and the plurality of first films 12 are alternately stacked. Between two ferromagnetic topological insulator films 11 adjacent to each other in a stacking direction, the first surface 11A of one ferromagnetic topological insulator film 11 and the second surface 11B of the other ferromagnetic topological insulator film 11 face each other.

Otherwise, the configuration of the second embodiment is the same as that of the first embodiment.

According to the second embodiment, a high conversion efficiency can be obtained, similar to the first embodiment. According to the first embodiment, in a case where the spin density n_{S} per unit volume of the ferromagnetic topological insulator film 11 is low, the total spin number N_{S} included in the ferromagnetic topological insulator film 11 is small, and it may not be possible to achieve a ferromagnetic resonance state (Kittel mode). In contrast, according to the second embodiment, because the plurality of ferromagnetic topological insulator films 11 are stacked, even in the case where the spin density n_{S} is low, the total spin number included in the stacked structure 10 can be sufficiently large, and it is possible to achieve the ferromagnetic resonance state. The conversion efficiency η_{TI} in the second embodiment can be represented by "(n × ϕ_{F})²/(n × N_{S})²", where n denotes the number of the ferromagnetic topological insulator films 11, and can thus be represented by "ϕ_{F}²/N_{S}²".

A thickness of the first film 12 sandwiched between the two ferromagnetic topological insulator films 11 is less than or equal to the thickness d of the ferromagnetic topological insulator film 11.

### (Third Embodiment)

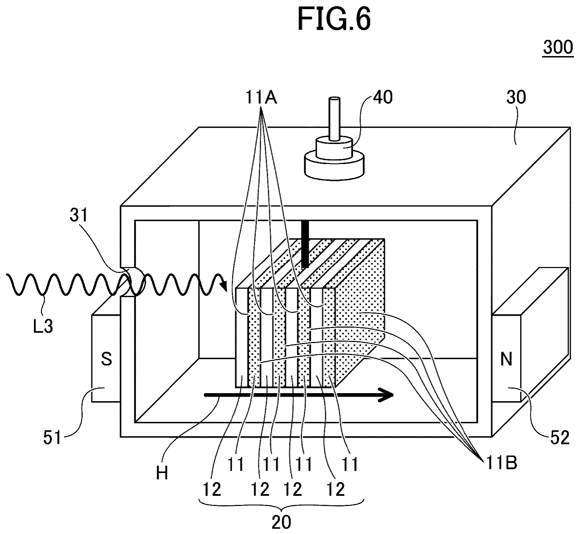

A third embodiment will be described. The third embodiment differs from the second embodiment mainly in a polarization of the laser light irradiated onto the ferromagnetic topological insulator film 11. FIG. 6 is a schematic diagram illustrating a quantum frequency converter according to the third embodiment.

As illustrated in FIG. 6, in a quantum frequency converter 300 according to the third embodiment, laser light L3 is irradiated from the outside toward the ferromagnetic topological insulator film 11 through the input port 31. The laser light L3 includes two types of laser light with orthogonal polarization angles. The laser light L3 is irradiated onto the first surface 11A of the ferromagnetic topological insulator film 11. The output port 32 may be omitted.

In the third embodiment, microwaves corresponding to the polarization of the laser light L3 are generated from the stacked structure 20 and emitted to the outside through the antenna 40. Hence, the optical photons of the laser light L3 irradiated onto the ferromagnetic topological insulator film 11 are quantum frequency converted into the microwave photons of the microwaves.

According to the third embodiment, it is possible to obtain a high conversion efficiency, similar to the second embodiment.

In the third embodiment, the stacked structure 10 may be used in place of the stacked structure 20.

The quantum frequency converter according to the present disclosure can be used for communication between superconducting qubits housed in a plurality of refrigerators, for example. However, the use of the quantum frequency converter according to the present disclosure is not limited to communication between superconducting qubits. In addition, the quantum frequency converter can be used for quantum computing.

Although the preferred embodiments or the like have been described in detail above, the present disclosure is not limited to the embodiments or the like described above, and various modifications and substitutions can be made to the embodiments or the like described above, without departing from the scope of the subject matter described in the claims.

### DESCRIPTION OF REFERENCE NUMERALS

10: stacked structure
11: ferromagnetic topological insulator film
11A: first surface
11B: second surface
12: first film
20: stacked structure
30: microwave resonator
31: input port
32: output port
40: antenna
51: S pole
52: N pole
100, 200, 300: quantum frequency converter

## Claims

1. A quantum frequency converter comprising:
a ferromagnetic topological insulator film having a first surface;
a magnetic field application region where a magnetic field including a component perpendicular to the first surface is applied to the ferromagnetic topological insulator film; and
a microwave transceiver configured to transmit and receive microwaves to and from the ferromagnetic topological insulator film,
wherein the first surface of the ferromagnetic topological insulator film is irradiated with laser light.

2. The quantum frequency converter as claimed in claim 1, wherein the ferromagnetic topological insulator film is provided in the microwave resonator.

3. The quantum frequency converter as claimed in claim 2, wherein the microwave resonator is provided with an input port through which the laser light is input from outside of the quantum frequency converter.

4. The quantum frequency converter as claimed in claim 3, wherein the microwave resonator is provided with an output port through which the laser light transmitted through the ferromagnetic topological insulator film is emitted to the outside of the quantum frequency converter.

5. The quantum frequency converter as claimed in any one of claims 1 to 4, wherein the ferromagnetic topological insulator film includes:
a topological insulator; and
a ferromagnetic material doped into the topological insulator,
wherein a spin density of the ferromagnetic topological insulator film is 6% or greater and 25% or less of a spin density of the ferromagnetic material.

6. The quantum frequency converter as claimed in claim 5, wherein:
the topological insulator includes Bi, Sb, and Te, and
the ferromagnetic material includes Cr, or V, or both of Cr and V.

7. The quantum frequency converter as claimed in any one of claims 1 to 4, wherein the ferromagnetic topological insulator film has a thickness that is 5 nm or greater and 100 µm or less.

8. The quantum frequency converter as claimed in any one of claims 1 to 4, wherein the ferromagnetic topological insulator film has a thickness that is 5 nm or greater and 30 nm or less.

9. The quantum frequency converter as claimed in any one of claims 1 to 4, further comprising:
a first film in contact with the ferromagnetic topological insulator film.

10. The quantum frequency converter as claimed in claim 9, wherein the ferromagnetic topological insulator film and the first film are alternately stacked multiple times.

11. The quantum frequency converter as claimed in claim 9, wherein the first film includes SrTiO₃, or InP, or Al₂O₃, or an arbitrary combination of two or more of SrTiO₃, InP, and Al₂O₃.

12. A quantum frequency conversion method using a quantum frequency converter comprising:
a ferromagnetic topological insulator film having a first surface;
a magnetic field application region where a magnetic field including a component perpendicular to the first surface is applied to the ferromagnetic topological insulator film; and
a microwave transceiver configured to transmit and receive microwaves to and from the ferromagnetic topological insulator film,
the quantum frequency conversion method comprising:
irradiating laser light on the first surface of the ferromagnetic topological insulator film.
